# EUROPEAN PATENT APPLICATION

(11) **EP 4 378 656 A1**
(43) Date of publication of application: **05.06.2024**
(21) Application number: 22849042.1
(22) Date of filing: 10.06.2022
(51) Int. Cl.: B29C 45/06, B29C 45/64

(54) **ROTARY PLATEN POSITIONING MECHANISM, MOLD CLAMPING DEVICE AND INJECTION MOLDING MACHINE**

(30) Priority: 26.07.2021 JP 2021121275
(71) Applicant: The Japan Steel Works, Ltd., Tokyo 141-0032 (JP)
(72) Inventor: MITANI, Souma, Tokyo 141-0032 (JP)
(74) Representative: Grünecker Patent- und Rechtsanwälte PartG mbB
(86) International application number: PCT/JP2022/023550
(87) International publication number: WO 2023/007964

(57) **Abstract**

The present invention pertains to a positioning mechanism (30) of a rotary platen (4) which is disposed so as to face a mold platen (7) and which is provided so as to be rotatable relative to the mold platen (7), said positioning mechanism comprising a positioning part (32) which is provided to one of the mold platen (7) and the rotary platen (4) and a positioning drive unit (31) which is provided to the other of the mold platen (7) and the rotary platen (4), wherein the positioning drive unit (31) includes a press member (36) and a press means (39), and when the press member (36) is pressed by the press means (39) so as to be in a state in which the press member (36) is fitted in the positioning part (32), the rotation position of the rotary platen (4) is positioned.

## Description

### TECHNICAL FIELD

The present invention relates to a position determining mechanism for determining a rotation position of a rotary platen provided to a mold platen and configured to rotate a mold, a mold clamping device including a rotary platen for rotating a mold, and an injection molding machine.

### BACKGROUND ART

A mold clamping device provided in an injection molding machine includes a fixed platen and a movable platen that is opened and closed with respect to the fixed platen. In an injection molding machine including a rotary platen, the rotary platen is provided to a mold platen of a fixed platen and a movable platen, and as described in Patent Literature 1, for example, the rotary platen is often provided to the movable platen. The rotary platen is provided to face the movable platen so as to rotate. Then, a plurality of molds, that is, rotary-side molds are attached. When the molds are clamped, one of the plurality of rotary-side molds is clamped with a fixed-side mold attached to the fixed platen. When a rotation position of the rotary platen is changed and the molds are clamped, another rotary-side mold is clamped with the fixed-side mold.

### CITATION LIST

### Patent Literature

Patent Literature 1: JP2009-45939A

### SUMMARY OF INVENTION

### TECHNICAL PROBLEM

In the injection molding machine including the rotary platen, a position determining mechanism for the rotary platen is provided. The position determining mechanism includes a stopper pin fixed to a circumferential portion of the rotary platen, and a stopper bolt provided on the mold platen. When the stopper pin comes into contact with the stopper bolt, the rotation position of the rotary platen is determined.

When the rotary platen is rotated to a predetermined rotation position, it is necessary to prevent the stopper pin from colliding with the stopper bolt. That is, when the rotary platen approaches the predetermined rotation position, a rotation speed is switched to a low speed. Then, the rotary platen is rotated at a low speed to bring the stopper pin into contact with the stopper bolt. In this way, damage to the stopper pin and the stopper bolt can be prevented. However, it is necessary to reduce the speed of the rotary platen to a low speed for a certain section, and thus there is a problem that the rotation takes time and a molding cycle becomes longer.

In view of the above problems, an object of the present disclosure is to provide a position determining mechanism for a rotary platen that can shorten the time required for rotation.

Other problems and novel features will become apparent from description of the present description and the accompanying drawings.

### SOLUTION TO PROBLEM

The present inventors have found that the above problems can be solved by adopting the following configuration as a position determining mechanism for a rotary platen. That is, the position determining mechanism for a rotary platen is implemented by a position determination part and a position determination driving unit. The position determination part is provided to one of a mold platen and the rotary platen, and the position determination driving unit is provided to the other one of the mold platen and the rotary platen. The position determination driving unit includes a press member and pressing means. When the press member is pressed by the pressing means such that the press member is fitted into the position determination part, a rotation position of the rotary platen is determined.

A solution to the above problem is as follows.
<1> A position determining mechanism for a rotary platen, the rotary platen being disposed to face a mold platen and being provided to be rotatable with respect to the mold platen, the position determining mechanism including:
   a position determination part provided to one platen of the mold platen and the rotary platen; and
   a position determination driving unit provided to the other platen,
   in which the position determination driving unit includes a press member and pressing means, and
   in which when the press member is pressed by the pressing means and the press member is fitted into the position determination part, a rotation position of the rotary platen is determined.
<2> The position determining mechanism for a rotary platen according to <1,
   in which a circular or arcuate guide portion concentric with the rotary platen is formed on the one platen, and the position determination part is provided continuously with the guide portion, and
   in which when the rotary platen rotates, the press member is configured to be pressed by the pressing means and slide in contact with the guide portion so as to be guided to the position determination part.
<3> The position determining mechanism for a rotary platen according to <2>, in which the pressing means is configured to press the press member according to a rotation position of the rotary platen, and in a case where the press member comes near the position determination part, the pressing means presses the press member so that the press member comes into contact with the guide portion.
<4> The position determining mechanism for a rotary platen according to <2> or <3>,
   in which the one platen is the rotary platen, and
   in which an outer peripheral wall of the rotary platen serves as the guide portion.
<5> The position determining mechanism for a rotary platen according to <1> to <4>, in which the position determination part is provided to the one platen at a reference position of the rotation position of the rotary platen and a position whose rotation phase is shifted by 180 degrees from the reference position.
<6> The position determining mechanism for a rotary platen according to <1> to <5>,
   in which a V-notch is formed in the position determination part, and
   in which a tip end of the press member is fittable into the V-notch.
<7> The position determining mechanism for a rotary platen according to <1> to <6>, in which a roller is provided at a tip end of the press member.
<8> The position determining mechanism for a rotary platen according to <1> to <7>, in which the pressing means includes a cylinder unit.
<9> The position determining mechanism for a rotary platen according to <8>, in which the pressing means includes a ball bush that is configured to guide movement of the press member.
<10> A mold clamping device including:
   a fixed platen, a mold being attachable to the fixed platen;
   a movable platen configured to move closer toward or away from the fixed platen;
   a rotary platen rotatably provided to face a surface of the movable platen closer to the fixed platen, a mold being attachable to the rotary platen; and
   a position determining mechanism configured to determine a rotation position of the rotary platen,
   in which the position determining mechanism includes:
      a position determination part provided on one platen of the movable platen and the rotary platen; and
      a position determination driving unit provided to the other platen,
   in which the position determination driving unit includes a press member and pressing means, and
   in which when the press member is pressed by the pressing means and the press member is fitted into the position determination part, a rotation position of the rotary platen is determined.
<11> The mold clamping device according to <10>,
   in which a circular or arcuate guide portion concentric with the rotary platen is formed on the one platen, and the position determination part is provided continuously with the guide portion, and
   in which when the rotary platen rotates, the press member is configured to be pressed by the pressing means and slide in contact with the guide portion so as to be guided to the position determination part.
<12> The mold clamping device according to <11>,
   in which the pressing means is configured to press the press member according to a rotation position of the rotary platen, and
   in which when the press member comes near the position determination part, the pressing means presses the press member so that the press member comes into contact with the guide portion.
<13> The mold clamping device according to <11> or <12>,
   in which the one platen is the rotary platen, and
   in which an outer peripheral wall of the rotary platen serves as the guide portion.
<14> The mold clamping device according to <10> to <13>, in which the position determination part is provided to the one platen at a reference position of the rotation position of the rotary platen and a position whose rotation phase is shifted by 180 degrees from the reference position.
<15> The mold clamping device according to <10> to <14>,
   in which a V-notch is formed in the position determination part, and
   in which a tip end of the press member is fittable into the V-notch.
<16> The mold clamping device according to <10> to <15>, in which a roller is provided at a tip end of the press member.
<17> The mold clamping device according to <10> to <16>, in which the pressing means includes a cylinder unit.
<18> An injection molding machine including:
   a mold clamping device configured to clamp a mold; and
   an injection device configured to inject an injection material,
   in which the mold clamping device includes:
      a fixed platen, a mold being attachable to the fixed platen;
      a movable platen configured to move closer toward or away from the fixed platen;
      a rotary platen rotatably provided to face a surface of the movable platen closer to the fixed platen, a mold being attachable to the rotary platen; and
      a position determining mechanism configured to determine a rotation position of the rotary platen,
   in which the position determining mechanism includes:
      a position determination part provided to one platen of the movable platen and the rotary platen; and
      a position determination driving unit provided to the other platen,
   in which the position determination driving unit includes a press member and pressing means, and
   in which when the press member is pressed by the pressing means and the press member is fitted into the position determination part, a rotation position of the rotary platen is determined.
<19> The injection molding machine according to <18>,
   in which a circular or arcuate guide portion concentric with the rotary platen is formed on the one platen, and the position determination part is provided continuously with the guide portion, and
   in which when the rotary platen rotates, the press member is configured to be pressed by the pressing means and slide in contact with the guide portion so as to be guided to the position determination part.

### ADVANTAGEOUS EFFECTS OF INVENTION

According to the present disclosure, it is possible to provide a position determining mechanism for a rotary platen that can shorten the time required for rotation of the rotary platen, a mold clamping device, and an injection molding machine.

### BRIEF DESCRIPTION OF DRAWINGS

[FIG. 1] FIG. 1 is a side view of an injection molding machine according to the present illustrative embodiment.
[FIG. 2] FIG. 2 is a front view showing a rotary platen, a part of a mold clamping device, and a position determining mechanism according to the present illustrative embodiment.
[FIG. 3] FIG. 3 is a front view showing the position determining mechanism and a part of the rotary platen according to the present illustrative embodiment.
[FIG. 4] FIG. 4 is a perspective view showing the position determining mechanism according to the present illustrative embodiment.
[FIG. 5A] FIG. 5A is a front view showing the position determining mechanism and a part of the rotary platen according to the present illustrative embodiment when a rotation position of the rotary platen is at a reference position.
[FIG. 5B] FIG. 5B is a front view showing the position determining mechanism and the part of the rotary platen according to the present illustrative embodiment when the rotary platen is in rotation.
[FIG. 5C] FIG. 5C is a front view showing the position determining mechanism and the part of the rotary platen according to the present illustrative embodiment when a position of the rotary platen is determined.
[FIG. 6] FIG. 6 is a front view showing a position determining mechanism and a part of a rotary platen in the related art.
[FIG. 7A] FIG. 7A is a front view showing a rotary platen, a part of a mold clamping device, and a position determining mechanism according to a second illustrative embodiment.
[FIG. 7B] FIG. 7B is a front view showing a position determining mechanism and a part of the rotary platen according to the second illustrative embodiment.
[FIG. 8] FIG. 8 is a front view showing a position determining mechanism and a part of a rotary platen according to a third illustrative embodiment.
[FIG. 9] FIG. 9 is a front view showing a position determining mechanism and a part of a rotary platen according to a fourth illustrative embodiment.

### DESCRIPTION OF EMBODIMENTS

Hereinafter, specific illustrative embodiments will be described in detail with reference to the drawings. However, the present invention is not limited to the following illustrative embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

The present illustrative embodiment will be described.

A position determining mechanism for a rotary platen according to an illustrative embodiment of the present invention is a position determining mechanism for a rotary platen, the rotary platen being disposed to face a mold platen and being provided to be rotatable with respect to the mold platen, the position determining mechanism including:
a position determination part provided to one platen of the mold platen and the rotary platen; and
a position determination driving unit provided to the other platen,
in which the position determination driving unit includes a press member and pressing means, and
in which when the press member is pressed by the pressing means such that the press member is fitted into the position determination part, a rotation position of the rotary platen is determined.

A mold clamping device according to an illustrative embodiment of the present invention includes:
a fixed platen, a mold being attachable to the fixed platen;
a movable platen configured to move closer toward or away from the fixed platen;
a rotary platen rotatably provided to face a surface of the movable platen closer to the fixed platen, a mold being attachable to the rotary platen; and
a position determining mechanism configured to determine a rotation position of the rotary platen,
in which the position determining mechanism includes:
   a position determination part provided to one platen of the movable platen and the rotary platen; and
   a position determination driving unit provided to the other platen,
in which the position determination driving unit includes a press member and pressing means, and
in which when the press member is pressed by the pressing means and the press member is fitted into the position determination part, a rotation position of the rotary platen is determined.

An injection molding machine according to an illustrative embodiment of the present invention includes:
a mold clamping device configured to clamp a mold; and
an injection device configured to inject an injection material,
in which the mold clamping device includes:
   a fixed platen, a mold being attachable to the fixed platen;
   a movable platen configured to move closer toward or away from the fixed platen;
   a rotary platen rotatably provided to face a surface of the movable platen closer to the fixed platen, a mold being attachable to the rotary platen; and
   a position determining mechanism configured to determine a rotation position of the rotary platen,
in which the position determining mechanism includes:
   a position determination part provided to one platen of the movable platen and the rotary platen; and
   a position determination driving unit provided to the other platen,
in which the position determination driving unit includes a press member and pressing means, and
in which when the press member is pressed by the pressing means and the press member is fitted into the position determination part, a rotation position of the rotary platen is determined.

### <Injection Molding Machine>

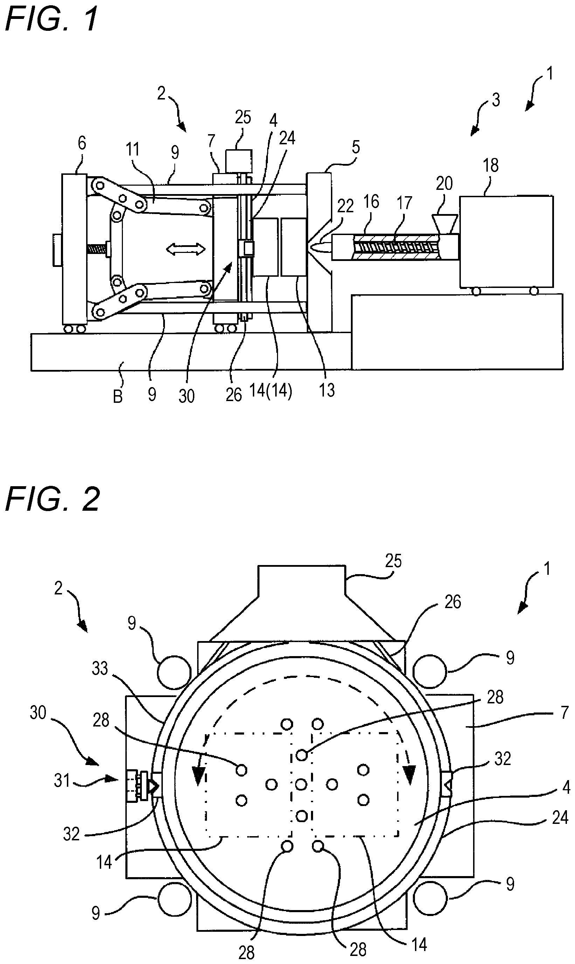

As shown in FIG. 1, an injection molding machine 1 according to the present illustrative embodiment includes a mold clamping device 2 configured to clamp a mold, an injection device 3 for melting and injecting an injection material, and a rotary platen 4 provided to the mold clamping device 2. The rotary platen 4 is provided with a position determining mechanism 30 configured to determine a rotation position of the rotary platen 4 according to the present illustrative embodiment, which will be described in detail later.

### <Mold Clamping Device>

The mold clamping device 2 includes a fixed platen 5 fixed on a bed B, a mold clamping housing 6 that slides on the bed B, and a movable platen 7 that also slides on the bed B. The fixed platen 5 and the mold clamping housing 6 are coupled by a plurality of, for example, four tie bars 9, 9 ... The movable platen 7 is slidable between the fixed platen 5 and the mold clamping housing 6. A mold clamping mechanism 11 is provided between the mold clamping housing 6 and the movable platen 7. The mold clamping mechanism 11 may be implemented by a direct pressure type mold clamping mechanism, that is, a mold clamping cylinder. In the present illustrative embodiment, the mold clamping mechanism 11 is implemented by a toggle mechanism.

The rotary platen 4 according to the present illustrative embodiment is provided to the movable platen 7. The fixed platen 5 is provided with a fixed-side mold 13. The rotary platen 4 is provided with two rotary-side molds 14, 14. In FIG. 1, the two rotary-side molds 14, 14 attached to the rotary platen 4 are provided on a front side and a back side of the paper surface, and are shown in an overlapping manner. One of the two rotary-side molds 14, 14 is aligned with the fixed-side mold 13 according to a rotation position of the rotary platen 4. When the mold clamping mechanism 11 is driven, the fixed-side mold 13 and one rotary-side mold 14 aligned therewith are opened and closed.

### <Rotary Platen>

FIG. 2 shows the rotary platen 4 and the movable platen 7 when viewed from a direction perpendicular to the rotary platen 4. The rotary platen 4 rotates smoothly with respect to the movable platen 7. A rotary platen driving mechanism 25 is provided above the movable platen 7. A pulley 24 having a diameter slightly larger than that of the rotary platen 4 is fixed to the rotary platen 4. As shown in FIGS. 1 and 2, a belt 26 is wound around the pulley 24 and the rotary platen driving mechanism 25. When the rotary platen driving mechanism 25 is driven, the pulley 24 and the rotary platen 4 rotate integrally. The rotary platen 4 has a plurality of rod holes 28 and 28 through which ejector rods protrude.

### <Injection Device>

The injection device 3 includes a heating cylinder 16, a screw 17 inserted in the heating cylinder 16, and a screw driving device 18 configured to drive the screw 17. A hopper 20 is provided in the vicinity of a rear end portion of the heating cylinder 16. An injection nozzle 22 is provided at a tip end of the heating cylinder 16.

### <Position Determining Mechanism>

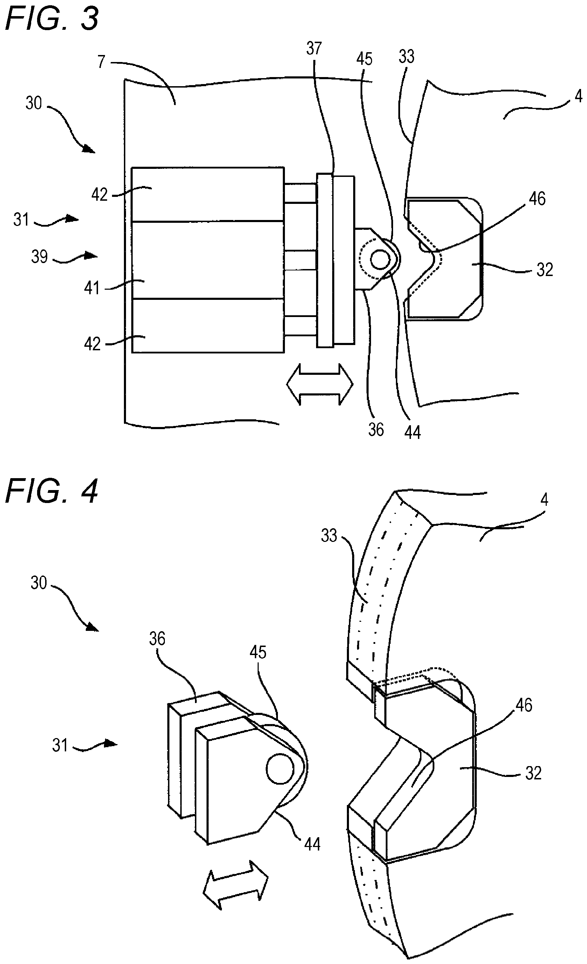

As shown in FIG. 2, the position determining mechanism 30 according to the first illustrative embodiment is provided to the movable platen 7 and the rotary platen 4. That is, the position determining mechanism 30 includes a position determination driving unit 31 provided to the movable platen 7, position determination parts 32 and 32 provided to the rotary platen 4, and a guide portion 33 formed of a side surface of the rotary platen 4. FIG. 3 shows a part of the rotary platen 4, a part of the movable platen 7, and the position determining mechanism 30 in an enlarged manner. FIG. 4 shows a part of the rotary platen 4 and a part of the position determining mechanism 30. These will be described with reference to the drawings.

### <Position Determination Driving Unit>

As shown in FIG. 3, the position determination driving unit 31 is provided adjacent to the side surface of the rotary platen 4. The position determination driving unit 31 includes a press member 36, a plate 37 to which the press member 36 is fixed, and a pressing means 39 configured to press or move the press member 36 and the plate 37 toward or away from the rotary platen 4.

In the illustrative embodiment of the present invention, the pressing means preferably includes a cylinder unit. Further, the pressing means preferably includes a ball bush that guides movement of the press member.

In the present illustrative embodiment, a so-called guided cylinder is adopted as the pressing means 39. That is, the pressing means 39 includes a cylinder unit 41 which is driven by air, and ball bushes 42 and 42 which are arranged at both ends of the cylinder unit 41. Therefore, when air is supplied, the press member 36 and the plate 37 maintain parallelism and are driven with high precision.

In the illustrative embodiment of the present invention, it is preferable that a roller is provided at a tip end of the press member.

As shown in FIGS. 3 and 4, the press member 36 has a tip end 44 formed into a V-shaped recessed shape, and is adapted to fit into the position determination part 32 to be described below. In the present illustrative embodiment, a roller 45 is rotatably provided at the tip end 44 of the press member 36.

### <Position Determination Part>

In the illustrative embodiment of the present invention, it is preferable that a V-notch is formed in the position determination part and that the tip end of the press member is fitted into the V-notch.

In the position determining mechanism 30 according to the present illustrative embodiment, the position determination part 32 is made of a metal plate and fixed to the rotary platen 4. A V-shaped notch, that is, a V-notch 46 is formed in the position determination part 32. When the tip end 44 of the press member 36 is fitted into the V-notch 46, a rotation position of the rotary platen 4 is determined. As shown in FIG. 2, the position determination parts 32 and 32 are provided on the rotary platen 4 at a reference position 47, which is a reference rotation position, and at a position whose phase is shifted by 180 degrees with respect to the reference position. In the present illustrative embodiment, the rotary platen 4 is reversed and positioned between the reference position and a position rotated by 180 degrees.

### <Guide Portion>

In the illustrative embodiment of the present invention, it is preferable that the one platen on which the position determination part is provided is the rotary platen, and an outer peripheral wall of the rotary platen serves as a guide portion.

In the present illustrative embodiment, the side surface of the rotary platen 4 serves as the guide portion 33 for guiding the press member 36. As described above, the roller 45 is provided at the tip end 44 of the press member 36, and the guide portion 33 is a lane on which the roller 45 rolls, as indicated by two-dot chain lines in FIG. 4. When the rotary platen 4 rotates, the press member 36 is guided by the roller 45 while being in contact with the guide portion 33, that is, while rolling, and is guided to the position determination part 32.

### <Operation of Position Determining Mechanism>

In the illustrative embodiment of the present invention, it is preferable that a circular or arcuate guide portion concentric with the rotary platen is formed on the one platen on which the position determination part is provided, the position determination part is provided continuously with the guide portion, and when the rotary platen rotates, the press member is configured to be pressed by the pressing means and slide in contact with the guide portion so as to be guided to the position determination part.

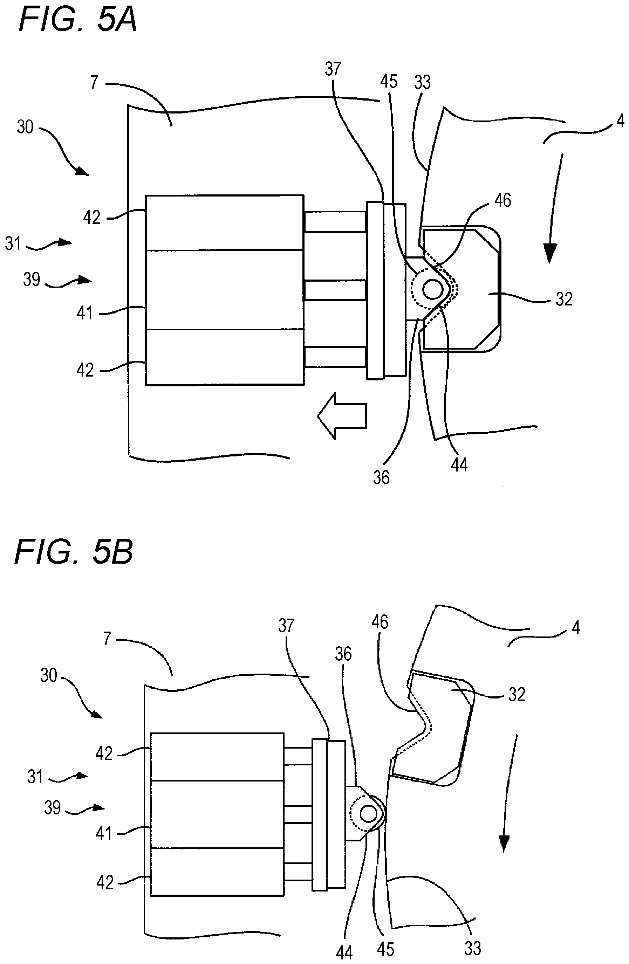

The operation of the position determining mechanism 30 according to the present illustrative embodiment will be described. When the rotation position of the rotary platen 4 is at the reference position, as shown in FIG. 5A, the tip end 44 of the press member 36 is fitted into the V-notch 46 of the position determination part 32. By supplying air to the cylinder unit 41, the press member 36 is moved backward, and a fitted state with the position determination part 32 is released. Then, the rotary platen 4 becomes rotatable. The rotary platen driving mechanism 25 (see FIG. 2) is driven to rotate the rotary platen 4.

When the rotary platen 4 starts to rotate, air is supplied to the cylinder unit 41 to move the press member 36 forward and press the press member 36 with a predetermined pressing force. Then, as shown in FIG. 5B, the roller 45 comes into contact with the guide portion 33. When the rotary platen 4 rotates, the roller 45 rolls on the guide portion 33 to guide the press member 36.

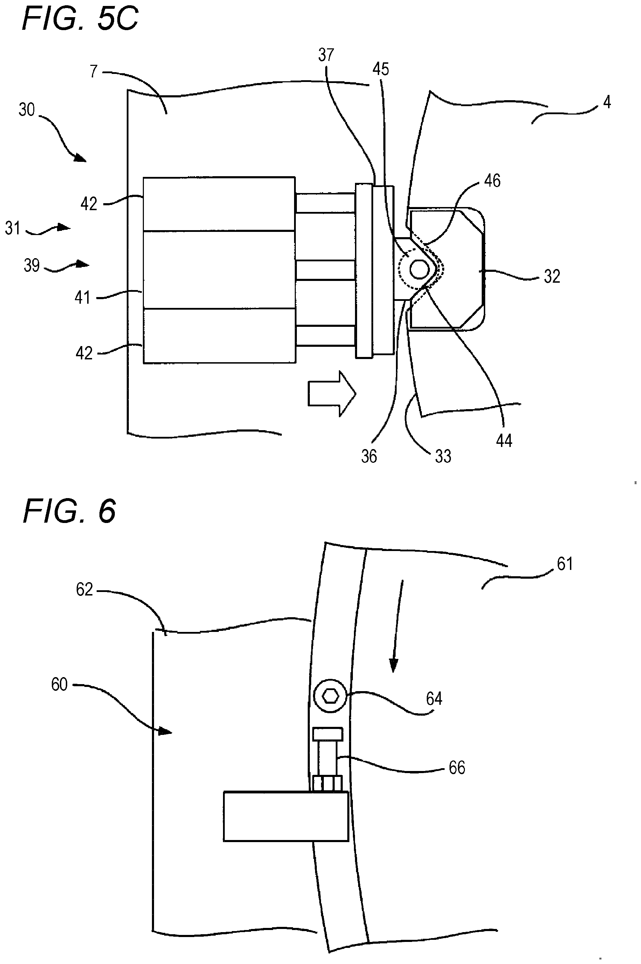

When the rotation position of the rotary platen 4 reaches approximately 180 degrees from the reference position, the tip end 44 of the press member 36 is pushed into the V-notch 46 of the position determination part 32. When the rotation position of the rotary platen 4 eventually reaches 180 degrees from the reference position, the tip end 44 of the press member 36 and the V-notch 46 of the position determination part 32 are fitted with each other. This state is shown in FIG. 5C. The rotary platen driving mechanism 25 (see FIG. 2) is stopped to stop the rotation of the rotary platen 4. The position of the rotary platen 4 is determined. In the present illustrative embodiment, the rotary platen 4 can be rotated at a relatively high speed until a timing when the position of the rotary platen 4 is determined, so that the rotary platen 4 can be rotated in a short time.

When the rotary platen 4 is rotated again, air is supplied to the cylinder unit 41, the press member 36 is moved backward, and a fitted state with the position determination part 32 is released. The rotary platen 4 is rotated, and the press member 36 is pressed against the guide portion 33 to be guided. Hereinafter, the rotation position of the rotary platen 4 is determined in the same manner.

### <Related-Art Position Determining Mechanism>

FIG. 6 shows a part of a rotary platen 61 and a part of a movable platen 62 included in an related-art position determining mechanism 60. The related-art position determining mechanism 60 includes a stopper pin 64 provided on the rotary platen 61 and a stopper bolt 66 provided on the movable platen 62. A rotation position of the rotary platen 61 is determined by bringing the stopper pin 64 into contact with the stopper bolt 66.

In the rotary platen 61 in the related art, in order to prevent the stopper pin 64 and the stopper bolt 66 from being damaged, it is necessary to adjust a rotation speed so that the stopper pin 64 and the stopper bolt 66 do not come into contact with each other in an impactful manner. That is, when the rotary platen 61 is rotated, it is necessary to reduce a speed of the rotary platen 61 when the stopper pin 64 and stopper bolt 66 approach each other. Therefore, there is a problem that the time required for rotation of the rotary platen 61 becomes longer. As described above, the position determining mechanism 30 (see FIG. 2) according to the present illustrative embodiment can allow the rotary platen 4 to be rotated at a relatively high speed and in a short period of time.

### <Position Determining Mechanism according to Second Illustrative Embodiment>

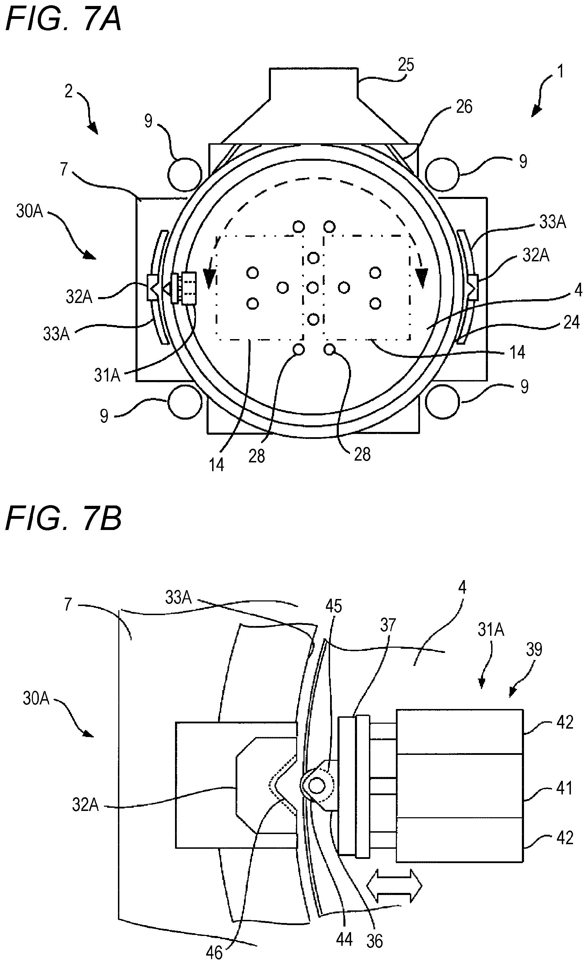

FIGS. 7A and 7B show the rotary platen 4 and the movable platen 7 provided with a position determining mechanism 30A according to a second illustrative embodiment. Members having the same functions as those of the injection molding machine 1 (see FIG. 1) according to the above illustrative embodiment, that is, the first illustrative embodiment, are denoted by the same reference numerals, and description thereof is omitted. The position determining mechanism 30A according to the second illustrative embodiment is configured such that a position determination driving unit 31A is provided on the rotary platen 4, and position determination parts 32A and 32A and the guide portions 33A and 33A are provided on the movable platen 7. That is, the arrangement of the position determination driving unit 31A, the position determination parts 32A and 32A, and the guide portions 33A and 33A is reversed with respect to those in the first illustrative embodiment.

In the illustrative embodiment of the present invention, it is preferable that the pressing means is configured to press the press member according to a rotation position of the rotary platen, and that in a case where the press member comes near the position determination part, the pressing means is configured to press the press member so that the press member comes into contact with the guide portion.

In the second illustrative embodiment, the guide portions 33A and 33A are formed in an arc shape concentric with the rotary platen 4. The roller 45 of the tip end 44 of the press member 36 rolls on an inner surface of the arc. The guide portions 33A and 33A are not circular but are formed in an arc shape, and are provided only in the vicinity of the position determination parts 32A and 32A. In the second illustrative embodiment, the cylinder unit 41 is driven to press the press member 36 when the press member 36 is near the position determination parts 32A, 32A. As a result, the tip end 44 of the press member 36 is guided by the guide portions 33A and 33A only for a short section, and is fitted into the position determination parts 32A, 32A.

### <Position Determining Mechanism according to Third Illustrative Embodiment>

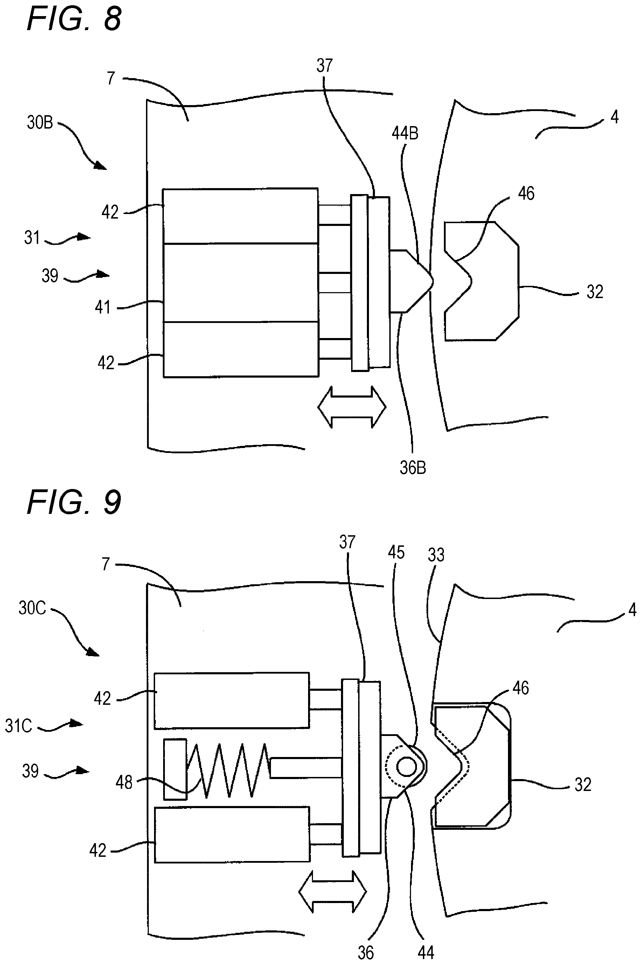

FIG. 8 shows the rotary platen 4 and the movable platen 7 provided with a position determining mechanism 30B according to a third illustrative embodiment. Members having the same functions as those of the injection molding machine 1 (see FIG. 1) according to the first illustrative embodiment, are denoted by the same reference numerals, and description thereof is omitted. In the third illustrative embodiment, the position determining mechanism 30B does not include the guide portion 33 (see FIGS. 2 and 3). Further, a tip end 44B of a press member 36B is not provided with the roller 45 (see FIGS. 2 and 3).

The position determining mechanism 30B according to the third illustrative embodiment is configured such that the press member 36B is pressed only when the rotary platen 4 is in the vicinity of the reference position or in the vicinity of a position whose phase is shifted by 180 degrees with respect to the reference position. When the tip end 44B of the pressed press member 36B is fitted into the V-notch 46 of a position determination part 32B, the position of the rotary platen 4 is determined.

### <Position Determining Mechanism according to Fourth Illustrative Embodiment>

FIG. 9 shows the rotary platen 4 and the movable platen 7 provided with a position determining mechanism 30C according to a fourth illustrative embodiment in which the pressing means 39 is configured by a spring body 48. In the illustrative embodiment, the spring body 48 presses the press member 36 with a relatively small pressing force. Therefore, even if the tip end 44 of the press member 36 is fitted into the V-notch 46 of the position determination part 32, when the rotary platen 4 is rotated, the tip end 44 is displaced from the V-notch 46 and a fitted state can be released.

### <Other Modifications>

Various modifications are possible for the position determining mechanism 30 according to the present illustrative embodiment. For example, it has been described that the position determination parts 32 and 32 are provided to the rotary platen 4 at the reference position and the position whose phase is shifted by 180 degrees with respect to the reference position. However, the arrangement of the position determination parts 32 is not limited thereto. For example, the position determination parts 32 may be provided at three or more positions at equal angular (equal phase) intervals. In addition, the position determination parts 32 may be provided, for example, at two or more positions at unequal angular (unequal phase) intervals, such as at three positions of the reference position, a position at 120 degrees, and a position at 180 degrees. The position determination part 32 may be provided at one position. The roller 45 provided at the tip end 44 of the press member 36 can also be modified. The roller 45 may not be provided and the tip end 44 may be coated with a low-friction material, such as a low-friction resin. Thus, the tip end 44 slides on the guide portion 33 in a sliding manner.

Further, the number of the position determination driving units 31 and the number of the position determination parts 32 may be changed. It has been described that one position determination driving unit 31, two position determination parts 32 and the like are provided. Alternatively, two position determination driving units 31 and one position determination part 32 may be provided. That is, one position determination part 32 is brought into a fitted state with the press members 36 of the different position determination driving units 31 and 31 according to the rotation position. The rotation position can also be determined in this way. In the injection molding machine 1 according to the present illustrative embodiment, it has been described that the rotary platen 4 is provided to the movable platen 7. Alternatively, the rotary platen 4 may be provided to the fixed platen 5.

Although the invention made by the present inventors is specifically described based on the illustrative embodiment, it is needless to say that the present invention is not limited to the illustrative embodiment described above, and various modifications can be made without departing from the scope of the invention. The plurality of examples described above may be appropriately combined.

### INDUSTRIAL APPLICABILITY

According to the present disclosure, it is possible to provide a position determining mechanism for a rotary platen that can shorten the time required for rotation of the rotary platen, a mold clamping device, and an injection molding machine.

Although the present invention has been described in detail with reference to a specific illustrative embodiment, it will be apparent to those skilled in the art that various changes and modifications can be made without departing from the spirit and scope of the present invention.

The present application is based on Japanese Patent Application No. 2021-121275 filed on July 26, 2021, and the contents thereof are incorporated herein as reference.

### REFERENCE SIGNS LIST

- 1: Injection molding machine
- 2: Mold clamping device
- 3: Injection device
- 4: Rotary platen
- 5: Fixed platen
- 6: Mold clamping housing
- 7: Movable platen
- 9: Tie bar
- 11: Mold clamping mechanism
- 13: Fixed-side mold
- 14: Rotary-side mold
- 16: Heating cylinder
- 17: Screw
- 18: Screw driving device
- 20: Hopper
- 22: Injection nozzle
- 24: Pulley
- 25: Rotary platen driving mechanism
- 26: Belt
- 28: Rod hole
- 30, 30A, 30B, and 30C: Position determining mechanism
- 31, 31A, and 31C: Position determination driving unit
- 32, 32A: Position determination part
- 33, 33A: Guide portion
- 36, 36B: Press member
- 37: Plate
- 39: Pressing means
- 41: Cylinder unit
- 42: Ball bush
- 44B, 44B: Tip end
- 45: Roller
- 46: V-notch
- 48: Spring body
- B: Bed
- 60: Position determining mechanism
- 61: Rotary platen
- 62: Movable platen
- 64: Stopper pin
- 66: Stopper bolt

## Claims

1. A position determining mechanism for a rotary platen, the rotary platen being disposed to face a mold platen and being provided to be rotatable with respect to the mold platen, the position determining mechanism comprising:
a position determination part provided to one platen of the mold platen and the rotary platen; and
a position determination driving unit provided to the other platen,
wherein the position determination driving unit includes a press member and pressing means, and
wherein when the press member is pressed by the pressing means and the press member is fitted into the position determination part, a rotation position of the rotary platen is determined.

2. The position determining mechanism for a rotary platen according to claim 1,
wherein a circular or arcuate guide portion concentric with the rotary platen is formed on the one platen, and the position determination part is provided continuously with the guide portion, and
wherein when the rotary platen rotates, the press member is configured to be pressed by the pressing means and slide in contact with the guide portion so as to be guided to the position determination part.

3. The position determining mechanism for a rotary platen according to claim 2, wherein the pressing means is configured to press the press member according to a rotation position of the rotary platen, and in a case where the press member comes near the position determination part, the pressing means presses the press member so that the press member comes into contact with the guide portion.

4. The position determining mechanism for a rotary platen according to claim 2 or 3,
wherein the one platen is the rotary platen, and
wherein an outer peripheral wall of the rotary platen serves as the guide portion.

5. The position determining mechanism for a rotary platen according to any one of claims 1 to 4, wherein the position determination part is provided to the one platen at a reference position of the rotation position of the rotary platen and a position whose rotation phase is shifted by 180 degrees from the reference position.

6. The position determining mechanism for a rotary platen according to any one of claims 1 to 5,
wherein a V-notch is formed in the position determination part, and
wherein a tip end of the press member is fittable into the V-notch.

7. The position determining mechanism for a rotary platen according to any one of claims 1 to 6, wherein a roller is provided at a tip end of the press member.

8. The position determining mechanism for a rotary platen according to any one of claims 1 to 7, wherein the pressing means includes a cylinder unit.

9. The position determining mechanism for a rotary platen according to claim 8, wherein the pressing means includes a ball bush that is configured to guide movement of the press member.

10. A mold clamping device comprising:
a fixed platen, a mold being attachable to the fixed platen;
a movable platen configured to move closer toward or away from the fixed platen;
a rotary platen rotatably provided to face a surface of the movable platen closer to the fixed platen, a mold being attachable to the rotary platen; and
a position determining mechanism configured to determine a rotation position of the rotary platen,
wherein the position determining mechanism comprises:
a position determination part provided on one platen of the movable platen and the rotary platen; and
a position determination driving unit provided to the other platen,
wherein the position determination driving unit includes a press member and pressing means, and
wherein when the press member is pressed by the pressing means and the press member is fitted into the position determination part, a rotation position of the rotary platen is determined.

11. The mold clamping device according to claim 10,
wherein a circular or arcuate guide portion concentric with the rotary platen is formed on the one platen, and the position determination part is provided continuously with the guide portion, and
wherein when the rotary platen rotates, the press member is configured to be pressed by the pressing means and slide in contact with the guide portion so as to be guided to the position determination part.

12. The mold clamping device according to claim 11,
wherein the pressing means is configured to press the press member according to a rotation position of the rotary platen, and
wherein when the press member comes near the position determination part, the pressing means presses the press member so that the press member comes into contact with the guide portion.

13. The mold clamping device according to claim 11 or 12,
wherein the one platen is the rotary platen, and
wherein an outer peripheral wall of the rotary platen serves as the guide portion.

14. The mold clamping device according to any one of claims 10 to 13, wherein the position determination part is provided to the one platen at a reference position of the rotation position of the rotary platen and a position whose rotation phase is shifted by 180 degrees from the reference position.

15. The mold clamping device according to any one of claims 10 to 14,
wherein a V-notch is formed in the position determination part, and
wherein a tip end of the press member is fittable into the V-notch.

16. The mold clamping device according to any one of claims 10 to 15, wherein a roller is provided at a tip end of the press member.

17. The mold clamping device according to any one of claims 10 to 16, wherein the pressing means includes a cylinder unit.

18. An injection molding machine comprising:
a mold clamping device configured to clamp a mold; and
an injection device configured to inject an injection material,
wherein the mold clamping device comprises:
a fixed platen, a mold being attachable to the fixed platen;
a movable platen configured to move closer toward or away from the fixed platen;
a rotary platen rotatably provided to face a surface of the movable platen closer to the fixed platen, a mold being attachable to the rotary platen; and
a position determining mechanism configured to determine a rotation position of the rotary platen,
wherein the position determining mechanism comprises:
a position determination part provided to one platen of the movable platen and the rotary platen; and
a position determination driving unit provided to the other platen,
wherein the position determination driving unit includes a press member and pressing means, and
wherein when the press member is pressed by the pressing means and the press member is fitted into the position determination part, a rotation position of the rotary platen is determined.

19. The injection molding machine according to claim 18,
wherein a circular or arcuate guide portion concentric with the rotary platen is formed on the one platen, and the position determination part is provided continuously with the guide portion, and
wherein when the rotary platen rotates, the press member is configured to be pressed by the pressing means and slide in contact with the guide portion so as to be guided to the position determination part.
